# EUROPEAN PATENT SPECIFICATION

(11) **EP 3 445 992 B1**
(45) Date of publication and mention of the grant of the patent: **12.10.2022**
(21) Application number: 17786223.2
(22) Date of filing: 19.04.2017
(51) Int. Cl.: F16F 9/10, E21B 29/12, F16F 7/12, F16F 9/20, E21B 19/00

(54) **SUBSEA DAMPER UNIT**
UNTERWASSERDÄMPFEREINHEIT
UNITÉ D'AMORTISSEUR SOUS-MARINE

(30) Priority: 22.04.2016 NO 20160672
(43) Date of publication of application: 27.02.2019
(73) Proprietor: Tech Damper AS, 7010 Trondheim (NO)
(72) Inventor: MOBECK, Ole Martin, 7037 Trondheim (NO)
(74) Representative: Acapo AS
(86) International application number: PCT/NO2017/050095
(87) International publication number: WO 2017/183991

(56) References cited:
- JP-A- 2014 151 824
- JP-U- S49 105 786
- US-A- 2 936 860
- US-A- 4 721 053
- US-A- 4 724 970
- US-A1- 2008 251 980
- US-A1- 2013 189 138
- US-A1- 2013 206 522

## Description

### Area of the invention

The present invention relates to a subsea damper unit, comprising a cylinder body equipped with an internal damper chamber filled with damper oil, said damper chamber contains a through-running piston rod with a piston that divides the damper chamber into two chamber parts, and where the piston is equipped with one or more valves that permit fluid communication between said chamber parts.

### Background to the invention

Vibrations in oil pipes and gas pipes or other subsea installations are a problem that has been given increasing attention lately. It appears that the problem is more extensive than first thought, and it is now recognised that action must be taken to maintain safety.

Vibrations in a structure above a given limit lead to structure tensions, which in turn will result in wear and breakages over time. Breakages in an oil-carrying pipe will lead to very unfortunate environmental consequences as well as dramatic consequences for the company responsible.

With an increasing focus on the extension of operating life for a field, it is becoming more and more important to safeguard the installations against breakages due to wear. To dampen the vibrations below a critical limit will therefore lead to an increased lifespan. It can also contribute to the safety of the production in a well.

### Description of prior art

Today, there are limited solutions for subsea vibrations. For vibrations at low frequencies, linear damper rods are most effective. Traditional damper rods have a low damper effect at low speeds and high hysteresis (slacken).

US 2013/0206522 A1 describes a damper unit, comprising a cylinder body equipped with an internal damper chamber filled with damper oil, a through-running piston rod with a piston that divides the damper chamber into two chamber parts, where the piston is equipped with one or more valves. A compressible chamber is mounted to the one end of the cylinder body.

JP S49 105786 U discloses a hydraulic shock absorber, according to the preamble of claim 1.

Furthermore, reference is given to US 2012/0241009 A1, US 2008251980 A1 and US 4724970 A.

### Objects of the present invention.

The damper unit according to the invention will, to a large extent, focus on damper control at low speeds, at the same time as it can provide large forces at high speed. Focus is also given to making it easier to get a qualified damper unit for subsea installation by constructing the damper unit such that the pressure of the ocean depths will not influence the damper unit.

The damper is made independent of the depth of installation due to a constant internal volume, pressure neutrality with respect to the water pressure and also low hysteresis and can have the possibility to deactivate the damper function subsea.

A further object is to provide an alternative construction of a damper unit.

### Summary of the invention

In the construction, seals and functioning of the damper unit, special attention is given to the challenges that arise from the pressure differences in and outside the damper during production, fitting and subsea operation.

The damper can be constructed so that it is not necessary to use a gas pressure reservoir to handle the internal volume changes because of the displacement of oil by the piston rod, such as those on conventional, telescopic dampers and hydraulic cylinders. The damper according to the invention can have a constant internal volume during compression and decompression. No shaft seal will thereby be subjected to seawater or higher pressure than what the damper function builds up, irrespective of installation depth.

The damper unit can also have a special function to turn off the damper function and make it powerless. This can be carried out from a ROV panel via a hydraulic hose. The ROV panel is a panel with functions that are mounted on subsea equipment. The panel can be formed such that a mini submarine can operate it.

Said objects are reached by a subsea damper unit as given in the introduction, comprising a cylinder body equipped with an internal damper chamber filled with damper oil, said damper chamber contains a through-running piston rod with a piston that divides the damper chamber into two chamber parts, and where the piston is equipped with one or more valves that permit fluid communication between said chamber parts. Mounted to each end of the cylinder body is a compressible and fluid-filled chamber with a fluid that takes up the same pressure as the surrounding water pressure, where respective fluid chambers are in fluid communication with each other, and the cylinder body comprises a pressurization valve or membrane that transfers the pressure from said fluid in at least one of the compressible fluid chambers of the damper oil in the damper chamber. One end of the cylinder body is fastened to a housing equipped with fastening devices, and the piston rod at the other end is equipped with fastening devices, and that the housing surrounds one of said fluid chambers and is equipped with openings that allow ingress of the surrounding seawater.

The piston rod is preferably fastened to respective, compressible fluid chambers.

The compressible fluid chambers can be formed as rolling bellows manufactured from rubber, such as reinforced rubber.

Furthermore, the compressible and fluid-filled chambers can be in fluid communication with each other via one or more channels, where the internal diameter of the channel or channels is large enough to prevent choking of the fluid stream.

Said one or more valves in the piston, which control the fluid communication between the chamber parts, comprise a valve for the control of the decompression force and another valve to control the compression force when the piston rod moves.

The pressurization valve that transmits the pressure from at least one of said fluid chambers to the damper oil in the damper chamber can comprise a watertight slide, bellows or the like to avoid mixing of oils.

For the deactivation of the damper it can be equipped with a valve to be able to turn off the damper force, where the valve controls the fluid communication of the damper oil between the chamber parts via a relief channel, instead of via said one or more valves in the piston.

For the testing of the damper, it can be equipped with a service port for the filling and removal of damper oil in the damper chamber.

The compressible and fluid filled chambers that are in fluid communication with each other can form a constant volume chamber that renders the damper pressure neutral with respect to the surrounding pressure.

### Description of the figures

Preferred embodiments of the invention shall, in the following, be described in more detail with reference to the enclosed figures, in which;

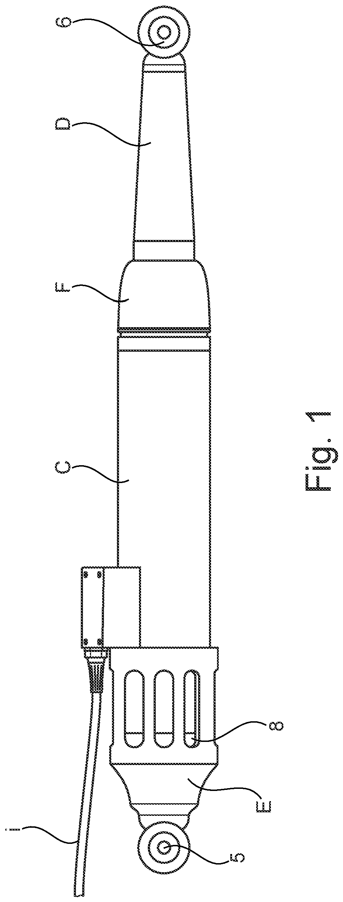

Figure 1 shows in perspective a damper unit according to the invention.
Figure 2 shows a principle diagram of the first embodiment of a damper unit according to the invention, seen in cross section.
Figure 3 shows a principle diagram of a second embodiment of a damper unit according to the invention, seen in cross section.

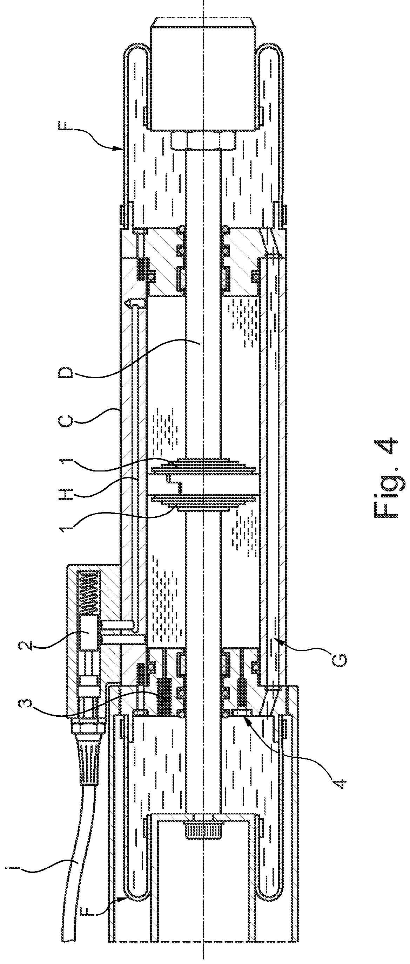

Figure 4 shows more details of a given embodiment of the damper unit according to the invention, seen in cross section.

### Description of preferred embodiments of the invention.

The damper unit according to the invention can be mounted between a fastening point (anchor, the ground, a rig, something heavy) and a pipe or other technical installation that has a low frequency vibration or has a need for dampening. For example, sudden pressure blows in a pipe. The damper unit can also be mounted between pipes in a flex loop pipe (pipe in a spiral form to be able to handle movements) where low frequency vibrations can arise between the pipes because of external and internal pressures and flow phenomena.

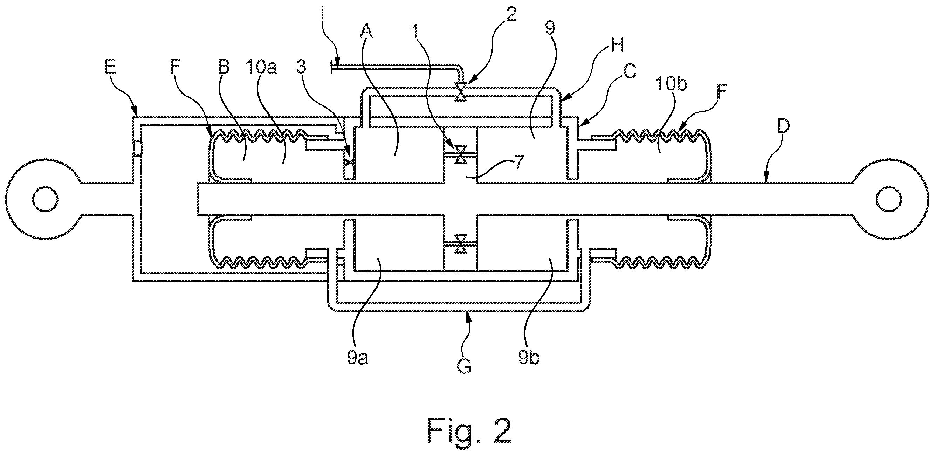

Initially, the assembly of the damper unit shall be explained, thereafter the function of the damper unit will be explained. As shown in the principle diagram in figure 2, the damper unit according to the invention comprises a housing E that can be equipped with an attachment lug 5. The housing E comprises, or is connected to, a cylinder body C that has an internal piston rod D that extends out from both ends of the cylinder body C. The cylinder body C is internally hollow and filled with a damper oil A in a damper chamber 9 and which is divided into two chambers 9a,9b by an intermediate piston 7, where the piston 7 is equipped with one or more valves 1 to control the damper force.

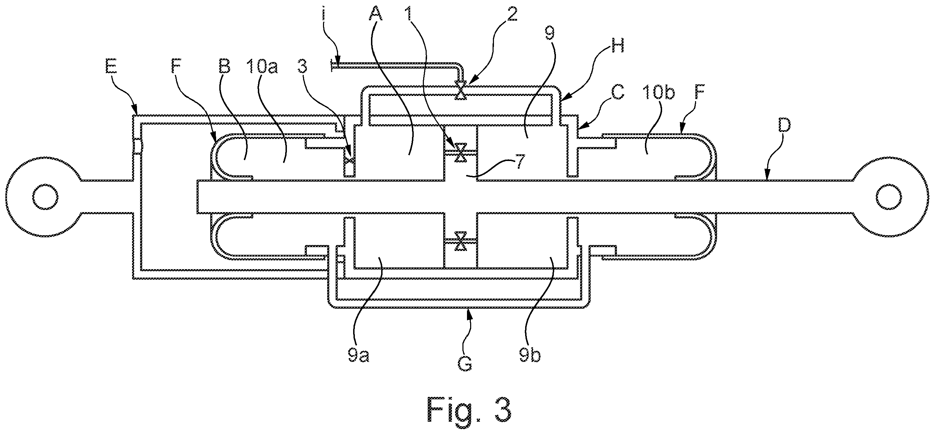

Mounted at respective ends of the cylinder body C are two compressible fluid chambers F which, in the example shown, contain oil B for a constant volume chamber. In a preferred embodiment, these compressible fluid chambers F are formed as rolling bellows (figure 3) or accordion bellows (figure 2) in reinforced rubber, but can also be formed from another flexible material. However, the expression "bellows" is used in the subsequent text to describe both types of bellows. The housing E is open to the surrounding environment, i.e. the surrounding seawater, via an opening 8, so that the pressure from the seawater affects the bellows F. Two bellows F are mounted at each end of the cylinder body C and are connected to each other via a line or channel G so that said constant volume chamber is formed.

A valve 3 is equipped to at least one end of the cylinder body C to transmit the pressure to the damper oil A. Correspondingly, a service port 4 can be mounted to the damper oil chamber 9 for filling and pressurising of the chamber 9, for example, to be able to test the damper on land.

An essential feature of the invention is that by the use of a through-running piston rod D one does not get a volume change in the damper and thereby avoids a gas reservoir to handle this. But it is important to pressurise the damper oil A to avoid cavitation and this is obtained by transferring the seawater pressure that acts on the bellows F, where the pressure goes via the oil/fluid B in the bellows F and is transmitted to the damper oil A via a valve/membrane 3. This ensures that the damper is pressure neutral with respect to the seawater pressure and no gaskets/seals need to be exposed to seawater. That the two bellows F are coupled together via the channel(s) G contributes to generate no volume changes in the damper.

### The damper piston and the damper valve

It is preferred that the damper is made with a large diameter for the damper piston 7 to move large amounts of oil from small movements as this increases the control of the damper force at low damper speed. The valve pack 1 that chokes the oil and decides the damper force is mounted directly on the piston 7, and there can be a valve to control the decompression force and another valve for the compression, which ensures that the damper hysteresis is very low.

### Pressure neutral construction

Dampers with a large piston diameter move large amounts of oil and this can cause cavitation behind the piston at large speeds, but this can be overcome by pressurising the damper oil. It is not desirable to operate with a gas reservoir to achieve this and pressure from the surrounding seawater is not used either. When the damper according to the invention is lowered down to installation depth, the pressure from the seawater will press against the bellow F, and this pressurises the oil B in the bellow F, and the pressure will be transmitted into the damper oil A in the damper chamber 9 via the valve 3. In this way, the whole of the damper will be pressure neutral with respect to the seawater pressure on the outside and there will be no pressure load on the cylinder body C or the bellows F as a consequence of the damper being mounted in deep water.

The valve 3 will not see any flow, only a pressure transmission. It can therefore comprise a watertight slide, membrane or bellows to avoid mixing of oils or to be able to relieve the pressure if the damper is taken up from an extreme depth. However, in the drawings a non-return valve is mounted that opens for pressure in towards the damper oil A in the damper chamber 9. When the damper is installed at ocean depths the pressure on the damper oil A is pressurised due to the seawater pressure and no cavitation will arise.

### The internal volume of the damper

The piston rod D is through-running and will therefore not cause any volume changes in the cylinder body C. A bellows F made from rubber is mounted at either end of the piston rod D on the outside of the cylinder body C and this gives two chambers 10a,10b that are filled with oil. The chambers 10a,10b are connected to the channel(s) G. When the damper moves, the volume of one of the chambers will increase and the other decrease, where the relationship between the increase and decrease in volume is the same. The oil B will change sides via the channel(s) G when the damper moves and the volume remains constant in the damper. Therefore, there will be no pressure changes in this system. The channel(s) G should be sufficient in number and large enough so that there is no chocking effect when the oil B flows through the channel(s) G. The piston rod gaskets will not be exposed to seawater either. Because of this construction with constant volume, the damper will not provide any static pushing force with the piston rod D and the seawater pressure will not be able to push the piston rod D into the damper either because of the pressure. The housing E will be open as the seawater presses against the rolling bellows F.

### Deactivation of the damper

It is desirable to be able to turn off the damper force on the damper for servicing or moving of the equipment the damper is mounted onto while it is subsea. This can be carried out in that one opens a valve 2 which is connected via a channel H to the two damper chambers 9a,9b. The oil A will then flow through the channel H instead of through the damper valve 1 in the piston 7 when the damper moves. The valve 2 can be opened with the help of hydraulic pressure from an ROV panel that is mounted so that it can be easily accessible for an ROV. One can also have an electrical remote control or mechanical operation of the valve directly from the damper. The hydraulic valve 2 in the drawing is such that with a rupture of the hose, the valve will close so that normal damper function will be maintained.

### Robust

Because of the damper being pressure neutral with respect to the seawater pressure it will not have to be dimensioned from the consideration of very high pressures at large depths. The cylinder body C, the bellows F and the piston rod gaskets around the piston rod D will not feel any difference in the load if they are mounted at, for example, 50 metres or 500 metres depths.

### Testing and maintenance

To be able to test the damper on land during production, one must pressurise the oil to avoid cavitation. This can be carried out via the service port 4. There, one can also fill and remove oil. The damper will initially not function satisfactorily at high speeds under normal atmospheric pressure without the oil A being pressurised.

### Explanation of the drawings.

A: Damper oil
B: Oil for the constant volume chamber
C: Main damper body, cylinder
D: Piston rod
E: Housing with attachment lug
F: Rolling bellows or accordion bellows in reinforced rubber
G: Oil channel for the constant volume chamber
H: Oil channel to deactivate the damper function
I: Hydraulic hose to the ROV panel
1: Valves mounted on the damper piston to control the damper force
2: Valve to be able to turn off the damper force
3: Valve that transmits in the seawater pressure to pressurise the damper oil
4: Service port for the damper oil chamber to fill and pressurise the chamber to be able to test the damper on land.
5,6: Fastening device in the form of attachment lugs
7: Damper piston
8: Opening for the surrounding seawater
9,9a,9b: Damper chambers
10a, 10b: Bellows chambers

## Claims

1. Subsea damper unit, comprising a cylinder body (C) equipped with an internal damper chamber (9) filled with damper oil (A), said damper chamber (9) contains a through-running piston rod (D) with a piston (7) that divides the damper chamber (9) into two chamber parts (9a,9b), and where the piston (7) is equipped with one or more valves (3) that permit fluid communication between said chamber parts (9a,9b),
a compressible and fluid-filled chamber (F) with a fluid (B) that takes up the same pressure as surrounding water pressure is mounted to each end of the cylinder body (C), where respective fluid chambers (F) are in fluid communication with each other, and
the cylinder body (C) comprises a pressurization valve or membrane (3) that transmits the pressure from said fluid (B) in at least one of the compressible fluid chambers (F) to the damper oil (A) in the damper chamber (9),
**characterised in that** one end of the cylinder body (C) is fastened to a housing (E) equipped with fastening devices (5), and that the piston rod (D) at the other end is equipped with fastening devices (6), and that the housing (E) surrounds one of said fluid chambers (F) and is equipped with openings (8) that allow ingress of the surrounding seawater.

2. Subsea damper unit according to claim 1, **characterised in that** the piston rod (D) is fastened to respective, compressible fluid chambers (F).

3. Subsea damper unit according to claim 1, **characterised in that** the compressible fluid chambers (F) are formed as rolling bellows or accordion bellows manufactured from rubber, such as reinforced rubber.

4. Subsea damper unit according to claim 1, **characterised in that** the compressible and fluid-filled chambers (F) are in fluid communication with each other via one or more channels (G), where the internal diameter of the channel (G) or the channels is large enough to prevent chocking of the fluid stream.

5. Subsea damper unit according to claim 1, **characterised in that** said one or more valves (3) in the piston (7), and which control the fluid communication between the chamber parts (9a,9b), comprises a valve to control the decompression force and another valve to control compression force.

6. Subsea damper unit according to claim 1, **characterised in that** the pressurization valve (3) that transmits the pressure from at least one of said fluid chambers (F) to the damper oil (A) in the damper chamber (9) comprises a watertight slide, bellows or the like to avoid mixing of the oils.

7. Subsea damper unit according to claim 1, **characterised in that** for deactivation of the damper it is equipped with a valve (2) to be able to turn off damper force, where the valve (2) controls fluid communication of the damper oil (A) between the chamber parts (9a,9b) via a relief channel (H), instead of through said one or more valves (3) in the piston (7).

8. Subsea damper unit according to claim 1, **characterised in that** for testing of the damper it is equipped with a service port (4) for filling and removal of damper oil (A) in the damper chamber (9).

9. Subsea damper unit according to claim 1, **characterised in that** the compressible and fluid-filled chambers (F) that are in fluid communication with each other form a constant volume chamber that makes the damper pressure neutral with respect to the surrounding pressure.

## Patentansprüche

1. Unterwasser-Dämpfereinheit, mit
einem Zylinderkörper (C), der mit einer inneren Dämpferkammer (9) ausgestattet ist, welche mit Dämpferöl (A) gefüllt ist, wobei die Dämpferkammer (9) eine hindurchgehende Kolbenstange (D) mit einem Kolben (7) aufweist, der die Dämpferkammer (9) in zwei Kammerteile (9a, 9b) unterteilt, und wobei der Kolben (7) mit einem oder mehreren Ventilen (3) ausgestattet ist, die eine Fluidverbindung zwischen den Kammerteilen (9a, 9b) ermöglichen,
einer komprimierbaren und flüssigkeitsgefüllten Kammer (F) mit einer Flüssigkeit (B), die den gleichen Druck wie der umgebende Wasserdruck annimmt und die an jedem Ende des des Zylinderkörpers (C) angebracht ist, wobei die jeweiligen Fluidkammern (F) miteinander in Fluidverbindung stehen, und wobei
der Zylinderkörper (C) ein Druckbeaufschlagungsventil oder eine Membran (3) umfasst, die den Druck von dem Fluid (B) in mindestens einer der komprimierbaren Fluidkammern (F) auf das Dämpferöl (A) in der Dämpferkammer (9) überträgt,
**dadurch gekennzeichnet, dass** ein Ende des Zylinderkörpers (C) an einem mit Befestigungsvorrichtungen (5) versehenen Gehäuse (E) befestigt ist, und dass die Kolbenstange (D) am anderen Ende mit Befestigungsvorrichtungen (6) versehen ist, und dass das Gehäuse (E) eine der Fluidkammern (F) umgibt und mit Öffnungen (8) versehen ist, die ein Eindringen des umgebenden Seewassers ermöglichen.

2. Unterwasser-Dämpfereinheit nach Anspruch 1, **dadurch gekennzeichnet, dass** die Kolbenstange (D) an zugehörigen, komprimierbaren Fluidkammern (F) befestigt ist.

3. Unterwasser-Dämpfereinheit nach Anspruch 1, **dadurch gekennzeichnet, dass** die komprimierbaren Fluidkammern (F) als aus Gummi, wie beispielsweise verstärktem Gummi, hergestellte Rollbälge oder Akkordeonbälge ausgebildet sind.

4. Unterwasserdämpfereinheit nach Anspruch 1, **dadurch gekennzeichnet, dass** die komprimierbaren und flüssigkeitsgefüllten Kammern (F) miteinander über einen oder mehrere Kanäle (G) in Fluidverbindung stehen, wobei der Innendurchmesser des Kanals (G) oder der Kanäle groß genug ist, um eine Stauung des Fluidstroms zu verhindern.

5. Unterwasser-Dämpfereinheit nach Anspruch 1, **dadurch gekennzeichnet, dass** das eine oder die mehreren Ventile (3) in dem Kolben (7), die die Fluidverbindung zwischen den Kammerteilen (9a, 9b) steuern, ein Ventil zur Steuerung der Dekompressionskraft und ein weiteres Ventil zur Steuerung der Kompressionskraft umfassen.

6. Unterwasser-Dämpfereinheit nach Anspruch 1, **dadurch gekennzeichnet, dass** das Druckbeaufschlagungsventil (3), das den Druck von mindestens einer der Fluidkammern (F) auf das Dämpferöl (A) in der Dämpferkammer (9) überträgt, einen wasserdichten Schieber, einen Faltenbalg oder dergleichen umfasst, um eine Vermischung der Öle zu vermeiden.

7. Unterwasser-Dämpfereinheit nach Anspruch 1, **dadurch gekennzeichnet, dass** sie zur Deaktivierung des Dämpfers mit einem Ventil (2) ausgestattet ist, um die Dämpferkraft abschalten zu können, wobei das Ventil (2) die Fluidverbindung des Dämpferöls (A) zwischen den Kammerteilen (9a, 9b) über einen Entlastungskanal (H) steuert, anstatt über das eine oder die mehreren Ventile (3) im Kolben (7).

8. Unterwasser-Dämpfereinheit nach Anspruch 1, **dadurch gekennzeichnet, dass** sie zum Prüfen des Dämpfers mit einer Wartungsöffnung (4) zum Einfüllen und Entnehmen von Dämpferöl (A) in der Dämpferkammer (9) ausgestattet ist.

9. Unterwasser-Dämpfereinheit nach Anspruch 1, **dadurch gekennzeichnet, dass** die komprimierbaren und flüssigkeitsgefüllten Kammern (F), die miteinander in Fluidverbindung stehen, eine Kammer mit konstantem Volumen bilden, die den Dämpferdruck bezüglich des Umgebungsdrucks neutralisiert.

## Revendications

1. Unité d'amortissement sous-marine, comprenant un corps de cylindre (C) équipé d'une chambre d'amortissement interne (9) remplie d'huile d'amortissement (A), ladite chambre d'amortissement (9) contenant une tige de piston traversante (D) avec un piston (7) qui divise la chambre d'amortissement (9) en deux parties de chambre (9a, 9b), et où le piston (7) est équipé d'une ou de plusieurs soupapes (3) qui permettent l'établissement d'une communication fluidique entre lesdites parties de chambre (9a, 9b) ;
une chambre compressible et remplie de fluide (F), avec un fluide (B) qui prend la même pression que la pression d'eau environnante, est montée sur chaque extrémité du corps de cylindre (C), où des chambres de fluide respectives (F) sont en communication fluidique l'une avec l'autre ; et
le corps de cylindre (C) comprend une soupape ou une membrane de pressurisation (3) qui transmet la pression dudit fluide (B) dans au moins une des chambres de fluide compressibles (F) vers l'huile d'amortissement (A) dans la chambre d'amortissement (9) ;
**caractérisée en ce qu'**une extrémité du corps de cylindre (C) est fixée sur un boîtier (E) équipé de dispositifs de fixation (5), et **en ce que** la tige de piston (D) au niveau de l'autre extrémité est équipée de dispositifs de fixation (6), et **en ce que** le boîtier (E) entoure une desdites chambres de fluide (F) et est équipé d'ouvertures (8) qui permettent l'entrée de l'eau de mer environnante.

2. Unité d'amortissement sous-marine selon la revendication 1, **caractérisée en ce que** la tige de piston (D) est fixée sur des chambres de fluide compressibles respectives (F).

3. Unité d'amortissement sous-marine selon la revendication 1, **caractérisée en ce que** les chambres de fluide compressibles (F) ont la forme de soufflets roulants ou de soufflets en accordéon fabriqués à partir de caoutchouc, tel que du caoutchouc renforcé.

4. Unité d'amortissement sous-marine selon la revendication 1, **caractérisée en ce que** les chambres compressibles et remplies de fluide (F) sont en communication fluidique l'une avec l'autre via un ou plusieurs canaux (G), où le diamètre intérne du canal (G) ou des canaux est suffisamment grand pour empêcher un calage du courant de fluide.

5. Unité d'amortissement sous-marine selon la revendication 1, **caractérisé en ce que** ladite une ou lesdites plusieurs soupapes (3) dans le piston (7), et qui contrôlent la communication fluidique entre les parties de chambre (9a, 9b), comprend une soupape pour contrôler la force de décompression et une autre soupape pour contrôler la force de compression.

6. Unité d'amortissement sous-marine selon la revendication 1, **caractérisée en ce que** la soupape de pressurisation (3), qui transmet la pression depuis au moins une desdites chambres de fluide (F) vers l'huile d'amortissement (A) dans la chambre d'amortissement (9), comprend un coulisseau étanche, des soufflets étanches ou similaire pour empêcher un mélange des huiles.

7. Unité d'amortissement sous-marine selon la revendication 1, **caractérisée en ce que**, pour la désactivation de l'amortisseur, elle est équipée d'une soupape (2) pour permettre la désactivation de la force d'amortissement, où la soupape (2) contrôle la communication fluidique de l'huile d'amortissement (A) entre les parties de chambre (9a, 9b) via un canal de décharge (H), au lieu de passer à travers ladite une ou lesdites plusieurs soupapes (3) dans le piston (7).

8. Unité d'amortissement sous-marine selon la revendication 1, **caractérisée en ce que**, pour tester l'amortisseur, elle est équipée d'un orifice de maintenance (4) pour remplir et évacuer l'huile d'amortissement (A) dans la chambre d'amortissement (9).

9. Unité d'amortissement sous-marine selon la revendication 1, **caractérisée en ce que** les chambres compressibles et remplies de fluide (F), qui sont en communication fluidique l'une avec l'autre, forment une chambre à volume constant qui rend la pression d'amortissement neutre par rapport à la pression environnante.
